# EUROPEAN PATENT SPECIFICATION

(11) **EP 4 012 231 B1**
(45) Date of publication and mention of the grant of the patent: **12.07.2023**
(21) Application number: 21213275.7
(22) Date of filing: 08.12.2021
(51) Int. Cl.: F16H 57/05, F16N 3/02, F16N 7/12, F16N 21/00

(54) **A SPRAY-BASED LUBRICATION SYSTEM FOR LUBRICATING DRIVE CHAINS OF WORKING MACHINES AND A FORESTRY WINCH WITH THE SAID SYSTEM**
SCHMIERSYSTEM AUF SPRÜHBASIS ZUM SCHMIEREN VON ANTRIEBSKETTEN VON ARBEITSMASCHINEN UND FORSTWIRTSCHAFTLICHE WINDE MIT DEM SYSTEM
SYSTÈME DE LUBRIFICATION PAR PULVÉRISATION POUR LA LUBRIFICATION DES CHAÎNES D'ENTRAÎNEMENT DES MACHINES DE TRAVAIL ET TREUIL FORESTIER COMPRENANT LEDIT SYSTÈME

(30) Priority: 08.12.2020 SI 202000227
(43) Date of publication of application: 15.06.2022
(73) Proprietor: Pisek - Vitli Krpan, d.o.o., 3240 Smarje pri Jelsah (SI)
(72) Inventor: Pisek, Franc, 3240 Smarje pri Jelsah (SI)
(74) Representative: Patentni Biro AF d.o.o.

(56) References cited:
- EP-A1- 3 614 023
- JP-A- 2007 099 465
- US-A- 5 213 180
- US-A- 5 269 614
- US-A1- 2018 209 585

## Description

### Field of the invention

The present invention belongs to the field of machinery, more precisely to the field of lubrication of drive chains in machinery, for example forestry winches. The invention relates to a spray-based lubrication system for lubricating drive chains of machines and a forestry winch with the said system.

### Background of the invention and the technical problem

Several machines, such as forestry winches, use drive chains in order to transmit motion from a first sprocket to a second sprocket. The largest problem in maintenance of forestry winches or similar machines is lubrication of said drive chains. If not done at all or not properly done, the chains have a significantly reduced life span. Drive elements, such as sprockets, drive chains and similar have to be protected from interference from outside, so that a user's arm shall not come into contact with these drive elements. Consequently, fast and simple manual lubrication is not possible. Currently known solutions employ lubricating nozzles and inlet (supply) channels as described in patent EP 3 144 576 B1 or patent application EP 3 614 023, or alternatively, lubrication is performed manually with a brush. The latter option, however, requires significant preparation, as particular protective elements have to be removed or in case of forestry winches, the winch itself has to be disengaged from the tractor. Due to this time-consuming process, the majority of users decide to abandon chain lubrication, thus significantly shortening their life span.

Lately, lubricating sprays have been recognized as effective in lubrication of drive chains, as the spray can penetrate between sliding surfaces to the location, where presence of the lubricant is really needed. The technical problem, solved by the present invention, is a constructional design of a lubrication system that will enable lubrication with a spray and will allow lubrication of drive chains when the machine is attached to a tractor running in idle, wherein lubrication is possible even without removal of protection or safety panels, which protect the drive elements against the environment and human interference.

The technical problem, solved by the present invention, is design of a lubrication system for lubricating drive chains with a spray, particularly intended for forestry winches where efficient and reliable lubrication is important for maintenance and optimal life span of drive chains. The aim of the invention is that the system is simpler than currently known systems and due to its compact design also more economically priced.

### State of the art

Utility model CN207454736 describes a lubrication system for lubricating a gearbox with an oil spray, which reaches the crucial components of the gearbox via an inlet pipe for the oil. As the gearbox is significantly different from winches and their drive chains, this solution is not suitable for use in forestry winches and similar machines.

Utility model CN206972886 discloses an oil spray lubrication system for large-scale ball mill ring gear, which is far more complicated from the present invention.

Document CN107152520 describes a lubrication spray tube assembly for a double-clutch automatic transmission drive system. The essence is a spray tube for lubrication, which is on one end connected to an inlet of a lubricating spray, while the other end is connected to a part of the transmission. Connections then lead to particular components that all gears and shafts are lubricated. This solution differs from the present invention in that it is more complicated due to the system of tubes, which are essential in lubrication of transmissions as they have significantly more components.

Patent application DE2102281 describes continuous lubrication of large sprockets with a spray nozzle that is arranged to move back and forth along the entire length of the teeth. The drive of the spray nozzle causes the fluid to flow from the centre of the sprocket towards its circumference. The spray nozzle may be mounted on a fulcrum or can be installed on two spindles with opposing threads to provide reciprocating motion.

JP2007099465 A describes another example of a known lubrication system.

### Description of the solution to the technical problem

The present invention differs from the above-mentioned solutions in that, moving nozzles or systems of inlet tubes are not needed. Known solutions have a complicated construction and do not enable fast and easy lubrication. The technical problem is solved as defined in the independent claim, while the preferred embodiments of the invention are defined in the dependent claims.

In a machine, preferably in a forestry winch, a suitable opening or a cavity is provided, said opening or cavity being arranged to receive a dedicated attachment or a seat, into which a lubrication spray is mounted, wherein said seat is coupled to drive chains with at least one inlet tube. The opening or the cavity is strategically located with regards to the location of the drive in the machine, preferably in the forestry winch, wherein the opening or cavity is preferably located slightly higher than the required point of lubrication. In case of drive chain lubrication, the system according to the invention is installed slightly above at least one drive chain or more chains with a suitable decline arranged to allow flow of the lubricating agent towards the chains.

The essence of the forestry winch with a spray-based lubrication system for lubricating drive chains is in that the system comprises:
- at least one attachment or seat arranged to receive a lubrication spray or a container of the lubrication spray in any position of the latter, preferably in the horizontal or vertical position,
- at least one supply tube, which is on one of its ends connected to the said attachment and is on the other end preferably provided with a lubrication brush for leading the lubrication agent from the spray inserted in the said attachment to the drive chain(s).

The number of attachments and supply tubes is adapted to the number of drive chains in the machine that need to be lubricated. The preferred lubrication brush is one or more, in case that the supply tube is divided into several tubes, wherein the brushes are mounted in holders, which are arranged to keep the brushes slightly in touch with the chain and/or the brushes slide along the chain. Said holders for brushes are installed in suitable places inside the machine or forestry winch, respectively, so that a proper position of lubrication brushes is ensured. Holders may be adjustable, so that their position and the position of brushes with regards to the chains can be re-set or corrected.

The seat or the attachment of the lubricating spray comprises the following elements:
- a base body, which is preferably shaped as a cylinder, and has:
   ∘ an opening arranged to receive a top part of the lubrication spray,
   ∘ a central bore for connection with the lubrication spray, preferably with its nozzle or solid tube (straw) inserted into said nozzle, wherein the bore is preferably provided in the centre of the base body,
- an outlet tube with preferred protrusions arranged to reliably hold the supply tube of the lubrication system.

The lubrication spray may be positioned coaxially with the attachment, wherein a direct pressure of the lubrication spray on the attachment triggers lubrication. The central bore is preferably provided in the centre of the base body, however, it may also be provided in any other part of the attachment, if this is beneficial due to the type of lubrication spray or its container. The base body may also have any other shape, however, the cylindrical shape is optimal, as most of the lubrication sprays are available as cylindrical cans. The attachment is mounted into the housing of the machine in an accessible position, wherein the supply tube is connected to the attachment or its outlet tube with preferred protrusions, respectively, and wherein the other end of the supply tube is equipped with lubrication brush(es). The material for the attachment may be any suitable material resistant to the lubrication agent, preferably the attachment is made from metal, aluminium, plastic or rubber material. Most preferably, the attachment is made from metal, while the supply tube is made from metal, plastic or any other suitable material. The lubrication brush is usually designed to comprise a metal base and plastic threads attached to the said base.

The lubricating spray is essentially a can (container) filled with a lubricating agent (fluid) under pressure, said can having at its top a valve designed to open upon pressure, which pushes the lubricating fluid through a nozzle and/or a solid tube (straw) optionally installed on the can. Said solid tube may be inserted into the attachment so that the fluid can freely flow from the solid tube along the central bore of the attachment to the supply tube and thereon onto the chain. In order to prevent leakage of the lubrication fluid the attachment is preferably installed in an inclined manner, in order to allow downwards flow of the lubrication fluid. A tight fit of the supply tube and the outlet tube of the attachment can be further ensured with seals, clamps or similar elements known to the skilled person. The lubrication spray may be any commercially available lubrication spray having required lubrication properties. It is only important that the lubrication spray can be via its nozzle or the solid tube reliably connected to the attachment of the lubrication system according to the invention.

The lubrication system according to the invention can be installed in any machine that uses drive chains requiring lubrication, whereas it is particularly useful for installation into forestry winches. In the latter case, the system is preferably installed in the vicinity or slightly above the drive chains, where the accessibility for the user is best, while a suitable decline ensures that the lubricating agent can flow from the attachment to the brush and then towards the chain.

The invention allows that lubrication of at least one drive chain is performed when the machine is coupled to a tractor and without the need for removal of protective elements that protect the drive elements. The process of lubrication of drive chains with the system according to the invention is performed as follows: the lubrication spray is with its solid tube pushed into the attachments of the lubrication system. The lubrication agent flows inside the solid tube, the central bore of the attachment and the supply tube to the lubrication brush, which slides along the drive chain. In case lubrication is performed during operation of the machine, even lubrication of the chain is achieved, which is desired. When lubrication is finished, the lubrication spray is removed. When further lubrication is needed, the lubrication spray is attached to the attachment as previously and lubrication is performed in the same manner. These steps may be repeated at any time when lubrication and maintenance of drive chains in a forestry winch or similar machine is required.

The spray-based lubrication system for lubricating drive chains of machinery and the forestry winch with the said system will be described in further detail based on exemplary embodiments and figures, which show:
- Figure 1: The lubricating system according to a possible embodiment without the supply tube and with connected lubrication spray
- Figure 2: Drive sprockets and chains connected with the lubricating system according to the embodiment shown in figure 1 without the lubrication spray
- Figure 3: A possible installation site for installation of the lubrication system according to the invention into a forestry winch

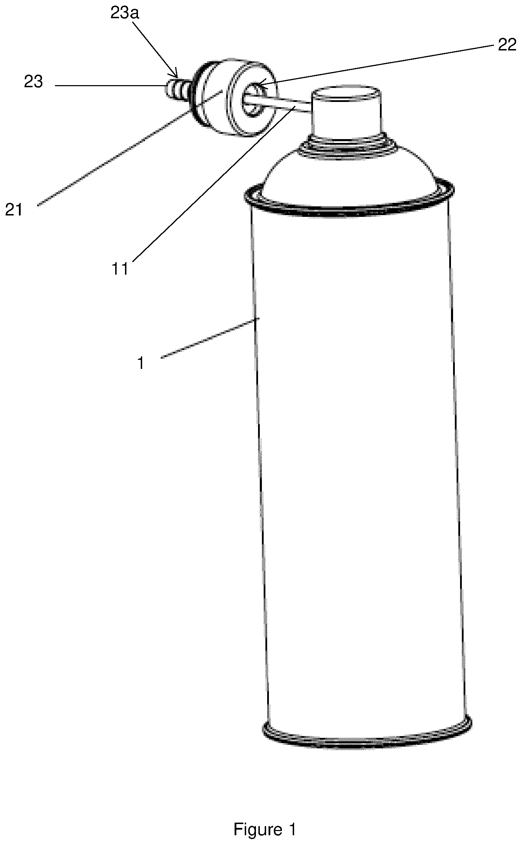

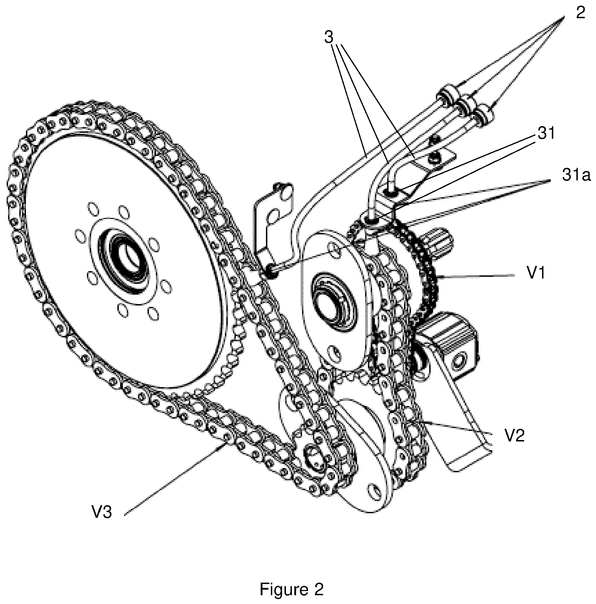

Figures 1 and 2 show the lubrication system according to a possible embodiment with a connected lubricating spray 1 and without the supply tube 3 (figure 1) as well as drive sprockets and chains V1, V2, V3 connected to the lubrication system, wherein the lubricating spray is not shown, while three supply tubes 3 are provided for each of the three chains V1, V2, V3, all mentioned supply tubes 3 being provided with a lubricating brush 31 for improved lubrication. The shown lubrication system comprises:
- at least one attachment 2 or seat arranged to receive the lubrication spray 1, wherein the attachment 2 has:
   ∘ a cylindrically shaped base body 21 with a round opening 22 arranged to receive the lubrication spray 1 and a central bore for connection with a solid tube 11 of the lubrication spray 1,
   ∘ outlet tubes 23 with preferred protrusions 23a for reliably holding of the supply tube 3 of the lubrication system,
- the lubrication spray 1, which can be provided separately from the system, and
- at least one supply tube 3, which is on one end connected to the said attachment 2 and is on the other end provided with the preferred lubricating brush 31 for supplying the lubricating agent from the spray 1 inserted into the said attachment 2 to the drive chains V1, V2, V3, wherein the position of the lubricating brush 31 is set with holders 31a of the brush 31.

The number of attachments 2 and supply tubes 3 can be adapted to the number of the drive chains that require lubrication in the machine, wherein in the example shown in figure 2, three attachments 2 and three supply tubes 3 are present due to three chains V1, V2, V3.

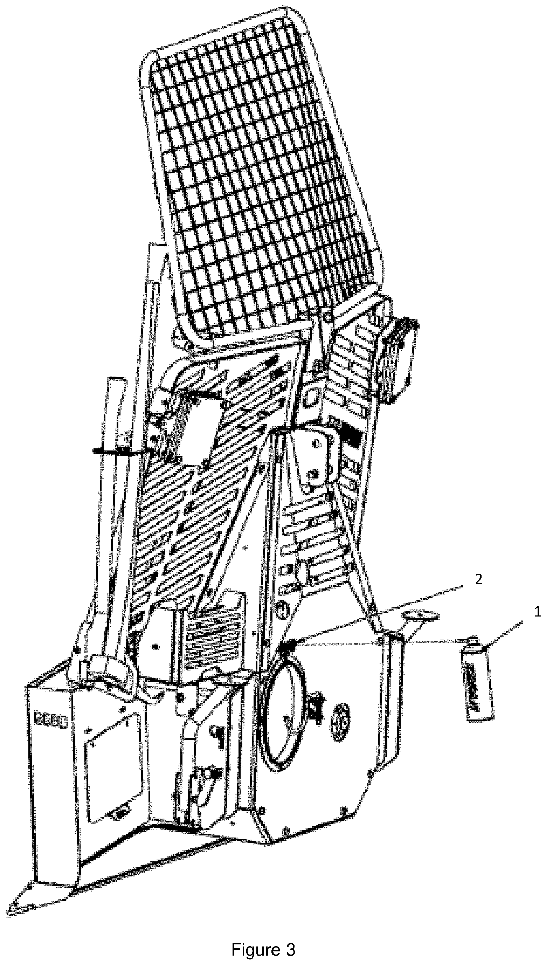

Figure 3 shows a possible place for installation of the lubrication system according to the present invention into a forestry winch, wherein the opening 4 arranged to receive the accessory 2 of the lubrication spray is provided above the space, where drive chains are located behind a protective element.

## Claims

1. A forestry winch with a spray-based lubrication system for lubricating drive chains of the forestry winch with a lubrication spray, wherein said system comprises:
- at least one attachment (2) arranged to receive a lubrication spray or container of the lubrication spray, wherein the attachment (2) comprises:
- a base body (21) having:
∘ an opening (22) arranged to receive a top part of the lubrication spray (1) or its container, preferably a solid tube (11) of the spray (1),
∘ a central bore for connection with the lubrication spray (1), preferably with its nozzle or solid tube (11), wherein the bore is arranged to allow flow of the lubrication agent from the spray (1),
∘ an outlet tube (23) with preferred protrusions (23a) arranged to reliably hold the supply tube (3) of the lubrication system, and
- at least one supply tube (3), which is on one of its ends connected to the said attachment (2) and is on the other end preferably provided with a lubrication brush (31) for leading the lubrication agent from the spray (1) arranged to be inserted in the said attachment (2) to at least one drive chain (V1, V2, V3) of the forestry winch,
**characterized in that** the forestry winch has a suitable opening or a cavity arranged to receive the dedicated attachment (2), into which the lubrication spray (1) is mounted, wherein said attachment (2) is coupled to drive chains (V1, V2, V3) with at least one inlet tube (3), wherein the opening or the cavity is strategically located slightly above at least one drive chain or more chains with a suitable decline arranged to allow flow of the lubricating agent towards the chains spray-based lubrication system for lubricating drive chains of machinery with a lubrication spray.

2. The forestry winch with the spray-based lubrication system for lubricating drive chains with a spray according to claim 1, **characterized in that** a lubricating brush (31) is mounted in a holder (31a) of the brush (31), said holder (31a) arranged to be installed in suitable places in the machine in order to ensure a proper position of the lubricating brush (31), wherein said holders (31a) may be adjustable.

3. The forestry winch with the spray-based lubrication system for lubricating drive chains with a spray according to claim 1 or 2, **characterized in that** the number of attachments (2) and supply tubes (3) is chosen with regards to the number of the drive chains (V1, V2, V3) of the machine that need to be lubricated.

4. The forestry winch with the spray-based lubrication system for lubricating drive chains with a spray according to any of the preceding claims, **characterized in that** base body (21) of the attachment (2) may have any shape, preferably it is cylindrically shaped and has the opening (22) for receiving a part of the lubrication spray (1) is circular.

5. The forestry winch with the spray-based lubrication system for lubricating drive chains with a spray according to any of the preceding claims, **characterized in that** the central bore may be provided anywhere in the attachment (2), preferably in the centre of the attachment (2).

6. The forestry winch with the spray-based lubrication system for lubricating drive chains with a spray according to any of the preceding claims, **characterized in that** the attachment (2) is made from any suitable material resistant to the lubricating agent, preferably the attachment (2) is made from metal, aluminium, plastic or rubber; the supply rube (3) is made from metal, or plastic; and the lubricating brush (31) comprises a metal base and plastic threads.

7. The forestry winch with the spray-based lubrication system for lubricating drive chains with a spray according to any of the preceding claims, **characterized in that** the system further comprises the lubrication spray (1), which is inserted into the attachment (2) of the lubrication system, so that the fluid can flow from the solid tube (11) along the central bore of the attachment (2) to the supply tube (3) and towards the chain (V1, V2, V3).

8. The forestry winch with the spray-based lubrication system for lubricating drive chains with a spray according to any of the preceding claims, **characterized in that** sealing between the supply tube (3) and the outlet tube (23) of the attachment (2) is achieved with seals, or clamps.

9. The forestry winch with the spray-based lubrication system for lubricating drive chains with a spray according to any of the preceding claims, **characterized in that** the position of the lubrication spray or its container is any suitable, preferably:
- vertical, so that lubrication is achieved with the solid tube (11) of the spray (1), or
- horizontal, so that the position of the spray (1) is coaxial with the central bore of the attachment (2) and lubrication is triggered by pressing the attachment (2).

## Patentansprüche

1. Forstwirtschaftliche Winde mit einem Schmiersystem auf Sprühbasis zum Schmieren von Antriebsketten der forstwirtschaftlichen Winde mit einem Schmierspray, wobei das System Folgendes umfasst:
- mindestens einen Aufsatz (2), der zur Aufnahme eines Schmiersprays oder eines Behälters für den Schmierspray angeordnet ist, wobei der Aufsatz (2) Folgendes umfasst:
- einen Basiskörper (21), aufweisend:
∘ eine Öffnung (22), die angeordnet ist, um einen oberen Teil des Schmiersprays (1) oder seines Behälters, vorzugsweise ein festes Rohr (11) des Sprays (1), aufzunehmen,
∘ eine zentrale Bohrung zur Verbindung mit dem Schmierspray (1), vorzugsweise mit dessen Düse oder festem Rohr (11), wobei die Bohrung so angeordnet ist, dass das Schmiermittel aus dem Spray (1) fließen kann,
∘ ein Auslassrohr (23) mit bevorzugten Vorsprüngen (23a), die angeordnet sind, um das Versorgungsrohr (3) des Schmiersystems zuverlässig zu halten, und
- mindestens ein Versorgungsrohr (3), das an einem seiner Enden mit dem Aufsatz (2) verbunden ist und am anderen Ende vorzugsweise mit einer Schmierbürste (31) zum Ableiten des Schmiermittels aus dem Spray (1) versehen ist, die zum Einstecken in den Aufsatz (2) zu mindestens einer Antriebskette (V1, V2, V3) der forstwirtschaftlichen Winde angeordnet ist,
**dadurch gekennzeichnet, dass** die forstwirtschaftliche Winde eine geeignete Öffnung oder einen Hohlraum zur Aufnahme des speziellen Aufsatzes (2) aufweist, in den das Schmierspray (1) montiert wird, wobei der Aufsatz (2) mit Antriebsketten (V1, V2, V3) mit mindestens einem Einlassrohr (3) gekoppelt ist, wobei die Öffnung oder der Hohlraum strategisch etwas über mindestens einer Antriebskette oder mehreren Ketten mit einem geeigneten Gefälle angeordnet ist, um den Fluss des Schmiermittels in Richtung der Ketten mit dem Schmiersystem auf Sprühbasis zum Schmieren von Antriebsketten von Maschinen mit einem Schmierspray zu ermöglichen.

2. Forstwirtschaftliche Winde mit dem Schmiersystem auf Sprühbasis zum Schmieren von Antriebsketten mit einem Spray nach Anspruch 1, **dadurch gekennzeichnet, dass** eine Schmierbürste (31) in einem Halter (31a) der Bürste (31) montiert ist, wobei der Halter (31a) angeordnet ist, um an geeigneten Stellen in der Maschine installiert zu werden, um eine ordnungsgemäße Position der Schmierbürste (31) sicherzustellen, wobei die Halter (31a) verstellbar sein können.

3. Forstwirtschaftliche Winde mit dem Schmiersystem auf Sprühbasis zum Schmieren von Antriebsketten mit einem Spray nach Anspruch 1 oder 2, **dadurch gekennzeichnet, dass** die Anzahl der Aufsätze (2) und Versorgungsschläuche (3) im Hinblick auf die Anzahl der Antriebsketten (V1, V2, V3) der Maschine, die geschmiert werden müssen, gewählt wird.

4. Forstwirtschaftliche Winde mit dem Schmiersystem auf Sprühbasis zum Schmieren von Antriebsketten mit einem Spray nach den vorstehenden Ansprüchen, **dadurch gekennzeichnet, dass** der Basiskörper (21) des Aufsatzes (2) jede beliebige Form aufweisen kann, vorzugsweise zylindrisch geformt ist und die Öffnung (22) zur Aufnahme eines Teils des Schmiersprays (1) kreisförmig ist.

5. Forstwirtschaftliche Winde mit dem Schmiersystem auf Sprühbasis zum Schmieren von Antriebsketten mit einem Spray nach den vorstehenden Ansprüchen, **dadurch gekennzeichnet, dass** die zentrale Bohrung an einer beliebigen Stelle im Aufsatz (2) vorgesehen sein kann, vorzugsweise in der Mitte des Aufsatzes ( 2).

6. Forstwirtschaftliche Winde mit dem Schmiersystem auf Sprühbasis zum Schmieren von Antriebsketten mit einem Spray nach den vorstehenden Ansprüchen, **dadurch gekennzeichnet, dass** der Aufsatz (2) aus jedem geeigneten Material hergestellt ist, das gegen das Schmiermittel beständig ist, dass vorzugsweise der Aufsatz (2) aus Metall, Aluminium, Kunststoff oder Gummi ist; das Versorgungsrohr (3) aus Metall oder Kunststoff hergestellt ist; und die Schmierbürste (31) eine Metallbasis und Kunststoffborsten umfasst.

7. Forstwirtschaftliche Winde mit dem Schmiersystem auf Sprühbasis zum Schmieren von Antriebsketten mit einem Spray nach den vorstehenden Ansprüchen, **dadurch gekennzeichnet, dass** das System ferner das Schmierspray
(1) umfasst, das in den Aufsatz (2) des Schmiersystems eingesetzt wird, so dass das Fluid aus dem festen Rohr (11) entlang der zentralen Bohrung des Aufsatzes
(2) zum Versorgungsrohr (3) und zur Kette (V1, V2, V3) fließen kann.

8. Forstwirtschaftliche Winde mit dem Schmiersystem auf Sprühbasis zum Schmieren von Antriebsketten mit einem Spray nach den vorstehenden Ansprüchen, **dadurch gekennzeichnet, dass** die Abdichtung zwischen dem Versorgungsrohr (3) und dem Auslassrohr (23) des Aufsatzes (2) durch Dichtungen oder Klammern erfolgt.

9. Forstwirtschaftliche Winde mit dem Schmiersystem auf Sprühbasis zum Schmieren von Antriebsketten mit einem Spray nach den vorstehenden Ansprüchen, **dadurch gekennzeichnet, dass** die Position des Schmiersprays bzw. seines Behälters beliebig ist, vorzugsweise:
- vertikal, so dass die Schmierung mit dem festen Rohr (11) des Sprays (1) erfolgt, oder
- horizontal, so dass die Position des Sprays (1) koaxial zur zentralen Bohrung des Aufsatzes (2) ist und die Schmierung durch Drücken des Aufsatzes (2) ausgelöst wird.

## Revendications

1. Un système de lubrification par pulvérisation pour la lubrification des chaînes d'entraînement des machines de travail et treuil forestier comprenant ledit système, où ledit système comprend :
- au moins une fixation (2) conçue pour recevoir un pulvérisateur de lubrification ou un boîtier pour le pulvérisateur de lubrification, où la fixation (2) comprend :
- un corps formant base (21) possédant :
∘ une ouverture (22) conçue pour recevoir une partie supérieure du pulvérisateur de lubrification (1) ou son boîtier, de préférence un tube solide (11) du pulvérisateur (1),
∘ un orifice cylindrique central pour le raccordement du pulvérisateur de lubrification (1), de préférence par le biais de sa buse ou de son tube solide (11), où l'orifice cylindrique est conçu de façon à permettre le passage de l'agent lubrifiant depuis le pulvérisateur (1),
∘ un tube de sortie (23) ayant de préférence des protubérances (23a) conçues pour tenir de façon fiable le tube d'alimentation (3) du système de lubrification, et
- au moins un tube d'alimentation (3), qui est à une de ses extrémités raccordé à ladite fixation (2) et est à l'autre extrémité de préférence muni d'une brosse lubrifiante (31) destinée à diriger l'agent lubrifiant depuis le pulvérisateur (1) conçu pour être inséré dans ladite fixation (2) jusqu'à au moins une chaîne d'entraînement (V1, V2, V3) du treuil forestier,
qui se **caractérise par le fait que** le treuil forestier possède une ouverture ou une cavité appropriée conçue pour recevoir la fixation dédiée (2), dans laquelle le pulvérisateur de lubrification (1) est monté, où ladite fixation (2) est couplée aux chaînes d'entraînement (V1, V2, V3) par au moins un tube d'admission (3), où l'ouverture ou la cavité est stratégiquement située légèrement au-dessus d'au moins une chaîne d'entraînement ou davantage avec une inclinaison appropriée conçue pour permettre le flux de l'agent lubrifiant vers les chaînes.

2. Le système de lubrification par pulvérisation pour la lubrification des chaînes d'entraînement des machines de travail et treuil forestier comprenant ledit système selon la revendication 1, **caractérisé par le fait qu'**une brosse lubrifiante (31) est montée dans un support (31a) de brosse (31), ledit support (31a) étant conçu pour être installé à des endroits appropriés dans la machine afin d'assurer un positionnement adéquat de la brosse lubrifiante (31), où ledit support (31a) peut être ajustable.

3. Le système de lubrification par pulvérisation pour la lubrification des chaînes d'entraînement des machines de travail et treuil forestier comprenant ledit système selon la revendication 1 ou 2, **caractérisé par le fait que** le nombre de fixations (2) et de tubes d'alimentation (3) est choisi en fonction du nombre de chaînes d'entraînement (V1, V2, V3) de la machine qui doit être lubrifiée.

4. Le système de lubrification par pulvérisation pour la lubrification des chaînes d'entraînement des machines de travail et treuil forestier comprenant ledit système selon l'une quelconque des revendications qui précèdent, **caractérisé par le fait que** le corps formant base (21) de la fixation (2) peut avoir n'importe quelle forme, mais a de préférence une forme cylindrique et possède une ouverture (22) destinée à recevoir une partie du pulvérisateur de lubrification (1) qui est de forme circulaire.

5. Le système de lubrification par pulvérisation pour la lubrification des chaînes d'entraînement des machines de travail et treuil forestier comprenant ledit système selon l'une quelconque des revendications qui précèdent, **caractérisé par le fait que** l'orifice cylindrique central peut être situé n'importe où sur la fixation (2), de préférence au centre de la fixation (2).

6. Le système de lubrification par pulvérisation pour la lubrification des chaînes d'entraînement des machines de travail et treuil forestier comprenant ledit système selon l'une quelconque des revendications qui précèdent, **caractérisé par le fait que** la fixation (2) est constituée de n'importe quel matériau approprié résistant à l'agent lubrifiant, la fixation (2) étant de préférence composée de métal, d'aluminium, de plastique ou de caoutchouc ; le tube d'alimentation (3) est composé de métal ou de plastique ; et la brosse lubrifiante (31) comprend une base métallique et des poils en plastique.

7. Le système de lubrification par pulvérisation pour la lubrification des chaînes d'entraînement des machines de travail et treuil forestier comprenant ledit système selon l'une quelconque des revendications qui précèdent, **caractérisé par le fait que** le système comprend en outre le pulvérisateur de lubrification (1), qui est inséré dans la fixation (2) du système de lubrification, de façon à ce que le liquide puisse circuler depuis le tube solide (11), le long de l'orifice cylindrique central de la fixation (2) jusqu'au tube d'alimentation (3) et en direction de la chaîne (V1, V2, V3).

8. Le système de lubrification par pulvérisation pour la lubrification des chaînes d'entraînement des machines de travail et treuil forestier comprenant ledit système selon l'une quelconque des revendications qui précèdent, **caractérisé par le fait que** l'étanchéité entre le tube d'alimentation (3) et le tube de sortie (23) de la fixation (2) est réalisé au moyen de joints d'étanchéité ou de colliers.

9. Le système de lubrification par pulvérisation pour la lubrification des chaînes d'entraînement des machines de travail et treuil forestier comprenant ledit système selon l'une quelconque des revendications qui précèdent, **caractérisé par le fait que** la position du pulvérisateur de lubrification ou de son boîtier peut être toute position appropriée, de préférence :
- verticale, pour que la lubrification soit réalisée avec le tube solide (11) du pulvérisateur (1), ou
- horizontale, de façon à ce que la position du pulvérisateur (1) soit coaxiale avec l'orifice cylindrique central de la fixation (2) et que la lubrification soit déclenchée par le pressage de la fixation (2).
